# FASCICULE DE BREVET EUROPEEN

(11) **EP 3 872 304 B1**
(45) Date de publication et mention de la délivrance du brevet: **05.04.2023**
(21) Numéro de dépôt: 21158028.7
(22) Date de dépôt: 19.02.2021
(51) Int. Cl.: F01D 17/10, F02C 7/18, F02C 9/18

(54) **SYSTÈME DE RÉGULATION COMPORTANT UNE VANNE, UN RÉGULATEUR, UN ACTIONNEUR ET UN SYSTÈME DE REFROIDISSEMENT UTILISANT DES TUBES CALODUCS**
REGULIERUNGSSYSTEM MIT EINEM VENTIL, EINEM REGLER, EINEM ANTRIEB UND EINEM KÜHLSYSTEM MIT WÄRMEROHREN
REGULATION SYSTEM COMPRISING A VALVE, A REGULATOR, AN ACTUATOR AND A COOLING SYSTEM USING HEAT PIPES

(30) Priorité: 27.02.2020 FR 2001954
(43) Date de publication de la demande: 01.09.2021
(73) Titulaire: AIRBUS OPERATIONS, 31060 Toulouse Cedex 9 (FR)
(72) Inventeur: ZEBIAN, Maxime, 31060 TOULOUSE (FR)
(74) Mandataire: Cabinet Le Guen Maillet

(56) Documents cités:
- EP-A2- 2 241 728
- EP-B1- 2 241 728
- US-A- 3 776 266
- US-A- 3 792 716
- US-A- 3 865 128

## Description

### DOMAINE TECHNIQUE

La présente invention concerne un système de régulation comportant une vanne, un régulateur, un actionneur et un système de refroidissement utilisant des tubes caloducs, un turboréacteur comportant au moins un tel système de régulation, ainsi qu'un aéronef comportant au moins un tel turboréacteur.

### ÉTAT DE LA TECHNIQUE ANTÉRIEURE

Les documents US-A-3,865,128 et EP-A-2 241 728 divulguent des systèmes de régulation de l'état de la technique.

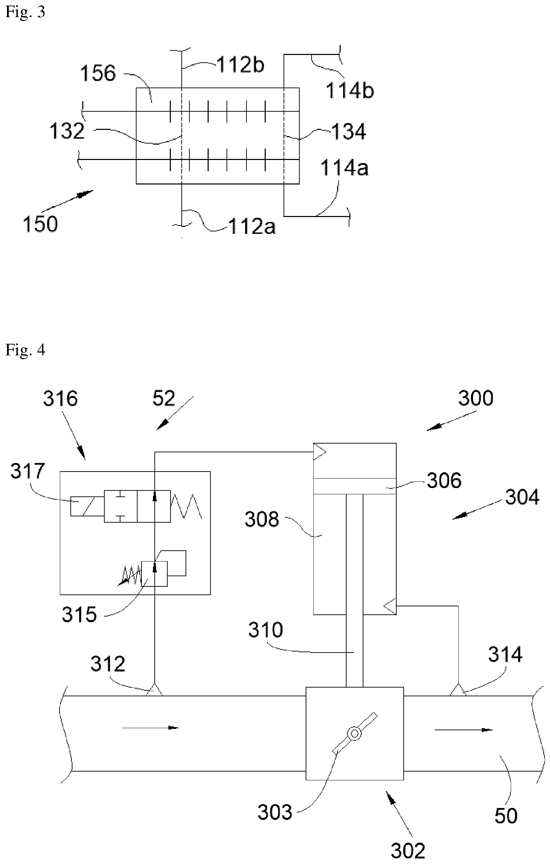

La Fig. 4 montre un système de régulation 300 de l'état de la technique. Le système de régulation 300 est mis en oeuvre sur une conduite 50 dans laquelle circule un air chaud qui, dans le cas d'un aéronef, peut venir des étages de compression du turboréacteur de l'aéronef. Le système de régulation 300 comporte une vanne 302 équipée d'un obturateur 303 qui est logé dans la conduite 50 et qui est mobile de manière à obturer plus ou moins ladite conduite 50 afin de réguler le débit d'air dans la conduite 50.

Le système de régulation 300 comporte également un actionneur 304 qui prend ici la forme d'un vérin dont le piston 306 partage le cylindre 308 en deux chambres et dont la tige 310 solidaire du piston 306 actionne l'obturateur 303. La transmission entre la tige 310 et l'obturateur 303 n'est pas décrite car cela dépend de l'environnement et du mode de transmission entre la tige 310 et l'obturateur 303.

En amont de la vanne 302, le système de régulation 300 comporte une prise d'air amont 312 arrangée sur la conduite 50, et en aval de la vanne 302, le système de régulation 300 comporte une prise d'air aval 314 arrangée sur la conduite 50.

Le système de régulation 300 comporte également un régulateur 316 qui comporte ici en série un réducteur de pression 315 et une électrovanne 317. Le réducteur de pression 315 permet de limiter la pression arrivant sur l'électrovanne 317 et l'électrovanne 317 fonctionne comme un interrupteur en laissant passer l'air lorsque la pression est supérieure à un seuil.

La prise d'air amont 312 est fluidiquement connectée à une entrée du régulateur 316 et une sortie du régulateur 316 est fluidiquement connectée à une première entrée de l'actionneur 304, et ici à l'une des chambres de l'actionneur 304.

La prise d'air aval 314 est fluidiquement connectée à une deuxième entrée de l'actionneur 304, et ici à l'autre chambre de l'actionneur 304.

L'actionneur 304 fonctionne par différence de pression entre ses deux entrées, et donc entre la pression en amont de la vanne 302 et la pression en aval de la vanne 302. En fonction de la différence de pression, l'actionneur 304 va déplacer l'obturateur 303 pour qu'il obture plus ou moins la conduite 50.

L'air prélevé dans la conduite 50 et qui pénètre dans le régulateur 316 ou dans l'actionneur 304 est à une température élevée. Pour permettre un fonctionnement optimal du régulateur 316 et de l'actionneur 304, ceux-ci doivent être refroidis. A cette fin, un flux d'air frais 52 est prélevé, en particulier dans une veine secondaire du turboréacteur, et dirigé sur le régulateur 316 et l'actionneur 304.

Si un tel système de régulation 300 fonctionne de manière efficace avec les moteurs actuels, il nécessite un refroidissement dédié qui engendre une consommation additionnelle de carburant. De plus, ce refroidissement risque d'atteindre ses limites avec l'arrivée de nouveaux moteurs générant des températures d'air plus élevées. En effet, en conservant ce principe de refroidissement, les flux d'air frais devront être augmentés par un prélèvement plus important dans la veine secondaire et ceci au détriment du rendement du turboréacteur.

Il est donc nécessaire de trouver un système de régulation qui comporte des moyens pour évacuer de manière plus performante la chaleur.

### EXPOSÉ DE L'INVENTION

Un objet de la présente invention est de proposer un système de régulation pneumatique comportant un système de refroidissement qui permet une meilleure évacuation de la chaleur. À cet effet, est proposé un système de régulation destiné à assurer la régulation de débit d'une conduite dans laquelle circule un flux d'air chaud, le système de régulation comportant :
- une vanne équipée d'un obturateur destiné à être logé dans la conduite,
- une prise d'air amont destinée à être arrangée sur la conduite en amont de la vanne,
- une prise d'air aval destinée à être arrangée sur la conduite en aval de la vanne,
- un régulateur comportant une entrée et une sortie et autorisant ou non le passage de l'air en fonction de la pression au niveau de son entrée, et
- un actionneur actionnant l'obturateur et comportant une première entrée et une deuxième entrée, où la première entrée est fluidiquement connectée à la sortie du régulateur,
le système de régulation étant caractérisé en ce qu'il comporte un système de refroidissement qui comporte :
- un radiateur externe soumis à un flux d'air,
- un boîtier comportant une première entrée, une deuxième entrée, une première sortie et une deuxième sortie, un premier chemin fluidique, à l'intérieur du boîtier, connectant fluidiquement la première entrée et la première sortie à travers le boîtier, et un deuxième chemin fluidique, à l'intérieur du boîtier, connectant fluidiquement la deuxième entrée et la deuxième sortie à travers le boîtier, les deux chemins fluidiques étant séparés,
- au moins un tube caloduc, chaque tube caloduc comportant une première extrémité en contact avec le radiateur externe et une deuxième extrémité logée dans le boîtier,
- un premier conduit amont connectant fluidiquement la prise amont à la première entrée du boîtier,
- un deuxième conduit amont connectant fluidiquement la première sortie du boîtier à l'entrée du régulateur,
- un premier conduit aval connectant fluidiquement la prise aval à la deuxième entrée du boîtier, et
- un deuxième conduit aval connectant fluidiquement la deuxième sortie du boîtier à la deuxième entrée de l'actionneur.

Un tel système de régulation permet une meilleure évacuation de la chaleur par l'action des tubes caloducs et ceci sans nécessiter une augmentation des flux d'air frais prélevés dans la veine secondaire dans le cas d'un turboréacteur.

Selon un mode de réalisation particulier, le boîtier est séparé en deux chambres fluidiquement isolées l'une de l'autre par une paroi intérieure, la deuxième extrémité de chaque tube caloduc est présente dans chaque chambre, le premier chemin fluidique est constitué par l'une des chambres qui s'étend entre la première entrée et la première sortie du boîtier, et le deuxième chemin fluidique est constitué par l'autre chambre qui s'étend entre la deuxième entrée et la deuxième sortie du boîtier. La pression dans les deux chambres est différente.

Selon un autre mode de réalisation particulier, le premier chemin fluidique est constitué par un premier conduit interne fluidiquement connecté entre le premier conduit amont et le deuxième conduit amont, et le deuxième chemin fluidique est constitué par un deuxième conduit interne fluidiquement connecté entre le premier conduit aval et le deuxième conduit aval.

Avantageusement, le premier conduit interne et le deuxième conduit interne sont enroulés autour de la deuxième extrémité de chaque tube caloduc.

Avantageusement, au moins un tube caloduc est en contact avec des parois du régulateur. Avantageusement, le radiateur externe comporte des ailettes et chaque tube caloduc traverse les ailettes à travers un orifice prévu à cet effet dans chaque ailette.

L'invention propose également un turboréacteur d'un aéronef, ledit turboréacteur comportant des étages de compression, une conduite dans laquelle circule un flux d'air chaud issu des étages de compression et un système de régulation selon l'une des variantes précédentes. Avantageusement, le turboréacteur comporte une veine secondaire et le radiateur externe est soumis à un flux d'air prélevé dans la veine secondaire.

L'invention propose également un aéronef comportant un turboréacteur selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, où
Fig. 1 est une vue de côté d'un aéronef comportant un système de régulation selon l'invention,
Fig. 2 est une représentation schématique d'un système de régulation selon l'invention,
Fig. 3 est une représentation schématique du boîtier selon un autre mode de réalisation de l'invention, et
Fig. 4 est une représentation schématique d'un système de régulation de l'état de la technique.

### EXPOSÉ DÉTAILLÉ DE MODES DE RÉALISATION

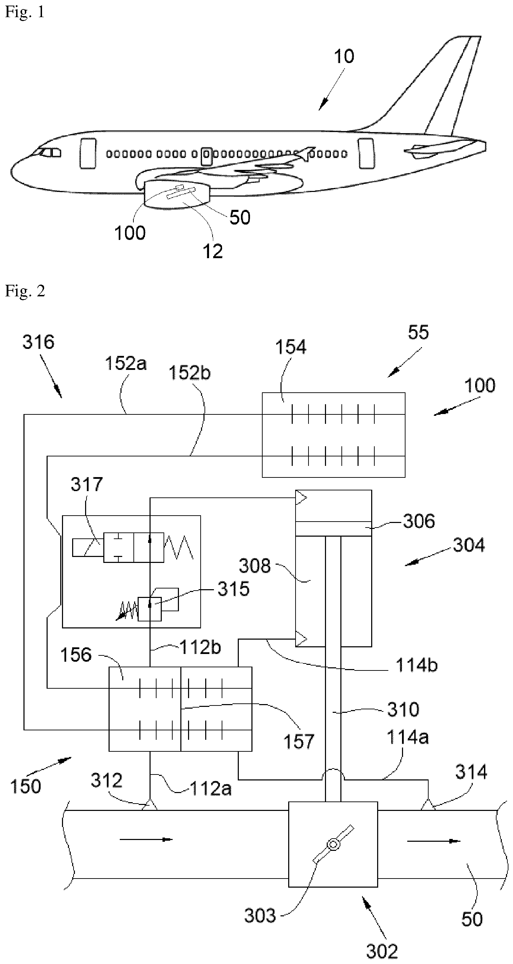

La Fig. 1 montre un aéronef 10 qui comporte un turboréacteur 12 avec des étages de compression, une conduite 50 dans laquelle circule un flux d'air chaud issu des étages de compression et un système de régulation 100 selon l'invention. En particulier, le turboréacteur 12 est du type turboréacteur à double flux et il comporte une veine secondaire alimentée en air frais à travers une soufflante.

La Fig. 2 montre le système de régulation 100 selon l'invention qui comporte certains éléments communs avec ceux du système de régulation 300 de l'état de la technique. Ces éléments portent les mêmes références.

Le système de régulation 100 comporte une vanne 302 équipée d'un obturateur 303 qui est logé dans la conduite 50 et qui est mobile de manière à obturer plus ou moins ladite conduite 50 afin de réguler le débit d'air dans la conduite 50. Dans la conduite 50 circule un air chaud qui, dans le cas d'un aéronef 10, peut venir des étages de compression du turboréacteur 12 de l'aéronef 10.

En amont de la vanne 302, le système de régulation 100 comporte une prise d'air amont 312 arrangée sur la conduite 50, et en aval de la vanne 302, le système de régulation 100 comporte une prise d'air aval 314 arrangée sur la conduite 50. Chaque prise d'air 312, 314 permet la capture d'une partie du flux d'air circulant dans la conduite 50.

Le système de régulation 100 comporte également un actionneur 304 qui est un actionneur hydraulique ou pneumatique ou électropneumatique comme représenté sur la Fig. 2, c'est-à-dire qu'il fonctionne par différence de pression entre la pression de l'air prélevé dans la conduite 50 au niveau de la prise d'air amont 312 et la pression de l'air prélevé dans la conduite 50 au niveau de la prise d'air aval 314. L'actionneur 304 actionne l'obturateur 303 et il subit l'échauffement dû à l'air chaud prélevé dans la conduite 50. L'actionneur 304 présente une première entrée et une deuxième entrée.

Dans le mode de réalisation de l'invention présenté ici, l'actionneur 304 prend la forme d'un vérin dont le piston 306 partage le cylindre 308 en deux chambres et dont la tige 310 solidaire du piston 306 actionne l'obturateur 303. La transmission entre la tige 310 et l'obturateur 303 n'est pas décrite car cela dépend de l'environnement et du mode de transmission entre la tige 310 et l'obturateur 303. Selon des modes de réalisation de l'invention, la transmission peut prendre la forme d'une tringle, d'un mécanisme à crémaillère, etc.

Le système de régulation 100 comporte également un régulateur 316 qui est un régulateur pneumatique ou électropneumatique, c'est-à-dire qu'il fonctionne avec l'air prélevé dans la conduite 50 ici au niveau de la prise d'air amont 312. Le régulateur 316 subit ainsi également l'échauffement dû à l'air chaud ainsi prélevé.

Dans le mode de réalisation de l'invention présenté ici, le régulateur 316 comporte en série un réducteur de pression 315 et une électrovanne 317 qui fonctionnent comme dans le cas de l'état de la technique. Le réducteur de pression 315 permet de limiter la pression arrivant sur l'électrovanne 317 et l'électrovanne 317 fonctionne comme un interrupteur en laissant passer l'air lorsque la pression est supérieure à un seuil.

Le régulateur 316 comporte une entrée et une sortie et il autorise ou non le passage de l'air en fonction de la pression au niveau de son entrée, c'est-à-dire ici au niveau de la prise d'air amont 312. La première entrée de l'actionneur 304 est fluidiquement connectée à la sortie du régulateur 316.

Pour limiter la température de l'air, le système de régulation 100 comporte également un système de refroidissement 150. Le système de refroidissement 150 comporte au moins un tube caloduc 152a-b et un radiateur externe 154 soumis à un flux d'air 55 qui est prélevé, en particulier dans la veine secondaire du turboréacteur 12 et qui est donc plus frais que l'air chaud circulant dans la conduite 50. Ici, le radiateur externe 154 comporte des ailettes qui assurent un meilleur échange thermique avec le flux d'air frais 55.

Chaque tube caloduc 152a-b se présente sous la forme d'un tube creux de forme circulaire, elliptique ou parallélépipédique. Le tube caloduc 152a-b est étanche et rempli de fluide caloporteur en équilibre thermodynamique liquide/vapeur.

Chaque tube caloduc 152a-b s'étend entre une première extrémité et une deuxième extrémité. La première extrémité de chaque tube caloduc 152a-b est en contact avec le radiateur externe 154, et plus particulièrement avec les ailettes du radiateur externe 154 pour transférer la chaleur du tube caloduc 152a-b aux ailettes et ensuite au flux d'air frais 55. En particulier, chaque tube caloduc 152a-b traverse les ailettes à travers un orifice prévu à cet effet dans chaque ailette.

Le radiateur externe 154 constitue ainsi un condenseur.

Le système de refroidissement 150 comporte également un boîtier 156 dans lequel est logée la deuxième extrémité de chaque tube caloduc 152a-b.

Dans le mode de réalisation de l'invention présenté à la Fig. 2, le boîtier 156 est séparé par une paroi intérieure 157 qui sépare le volume intérieur du boîtier 156 en deux chambres fluidiquement isolées l'une de l'autre et où la deuxième extrémité de chaque tube caloduc 152a-b est présente dans chaque chambre en traversant la paroi intérieure 157.

Dans le mode de réalisation de la Fig. 3, le boîtier 156 est constitué d'une seule chambre dans laquelle est logée la deuxième extrémité de chaque tube caloduc 152a-b.

La prise d'air amont 312 est fluidiquement connectée à une première entrée du boîtier 156 par un premier conduit amont 112a.

Une première sortie du boîtier 156 est fluidiquement connectée à l'entrée du régulateur 316 par un deuxième conduit amont 112b.

Dans le mode de réalisation de l'invention représenté sur la Fig. 2, le deuxième conduit amont 112b se prolonge à partir de l'entrée du régulateur 316 jusqu'à la première entrée de l'actionneur 304 en traversant successivement le réducteur de pression 315, l'électrovanne 317 et la sortie du régulateur 316.

La première entrée du boîtier 156 et la première sortie du boîtier 156 sont fluidiquement connectées par un premier chemin fluidique qui traverse le boîtier 156.

La prise d'air aval 314 est fluidiquement connectée à une deuxième entrée du boîtier 156 par un premier conduit aval 114a.

Une deuxième sortie du boîtier 156 est fluidiquement connectée à une deuxième entrée de l'actionneur 304, et ici à l'autre chambre de l'actionneur 304 par un deuxième conduit aval 114b.

La deuxième entrée du boîtier 156 et la deuxième sortie du boîtier 156 sont fluidiquement connectées par un deuxième chemin fluidique qui traverse le boîtier 156.

Le premier chemin fluidique et le deuxième chemin fluidique sont séparés l'un de l'autre, c'est-à-dire qu'ils sont fluidiquement étanches l'un par rapport à l'autre. Chaque chemin fluidique est ainsi à l'intérieur du boîtier 156.

Le fonctionnement du système de régulation 100 est identique au fonctionnement du système de régulation 300 de l'état de la technique.

Ainsi, la chaleur transportée par le premier conduit amont 112a et le deuxième conduit aval 114a se transfère vers la deuxième extrémité de chaque tube caloduc 152a-b en traversant le boîtier 156 qui constitue ainsi un évaporateur. Le boîtier 156 est disposé en amont par rapport au régulateur 316, c'est-à-dire entre la prise d'air amont 312 et l'entrée du régulateur 316. Ainsi, l'air chaud parcourant le premier conduit amont 112a et le deuxième conduit amont 114a se refroidit en traversant le boîtier 156 avant d'arriver respectivement au régulateur 316 ou à l'actionneur 304. La chaleur se transfère à la deuxième extrémité de chaque tube caloduc 152a-b puis par fonctionnement interne de chaque tube caloduc 152a-b, la chaleur est transférée à la première extrémité de chaque tube caloduc 152a-b et évacuée par les ailettes du radiateur externe 154.

Les gradients de température entre la deuxième extrémité (extrémité chaude) et la première extrémité (extrémité froide) du tube caloduc 152a-b génèrent des gradients de pression qui entraînent une circulation du fluide caloporteur à l'intérieur du tube caloduc 152a-b permettant le transport de masse et donc de chaleur entre l'évaporateur 156 et le condenseur 154. En effet, suivant un cycle continu : le liquide caloporteur est chauffé dans l'évaporateur 156 et se vaporise et la vapeur générée se dirige vers l'extrémité froide du tube caloduc 152a-b où elle se condense en restituant la chaleur latente qu'elle a accumulée. Le liquide formé revient vers l'extrémité chaude du tube caloduc 152a-b sous l'effet de la gravité. Ainsi, pour assurer un fonctionnement optimal du système de refroidissement 150, la première extrémité doit être plus haute que la deuxième extrémité.

Avec un tel système de refroidissement 150, la température du flux d'air capté à chaque prise d'air 312, 314 peut être réduite avant d'entrer dans le régulateur 316 ou l'actionneur 304 et ainsi, la quantité d'air frais 55 n'a pas besoin d'être augmentée et peut être même diminuée par rapport au principe de refroidissement direct dans le cas de l'état de la technique et les performances du turboréacteur sont ainsi garanties.

Dans le mode de réalisation de la Fig. 2, le premier chemin fluidique est constitué par l'une des chambres du boîtier 156 qui s'étend entre la première entrée et la première sortie du boîtier 156, et le deuxième chemin fluidique est constitué par l'autre chambre du boîtier 156 qui s'étend entre la deuxième entrée et la deuxième sortie du boîtier 156.

Dans le mode de réalisation de la Fig. 3, le premier chemin fluidique est constitué par un premier conduit interne 132 fluidiquement connecté entre le premier conduit amont 112a et le deuxième conduit amont 112b, et le deuxième chemin fluidique est constitué par un deuxième conduit interne 134 fluidiquement connecté entre le premier conduit aval 114a et le deuxième conduit aval 114b.

Dans le mode de réalisation de la Fig. 3, pour améliorer le transfert de chaleur dans le boîtier 156, le premier conduit interne 132 et le deuxième conduit interne 134 sont enroulés autour de la deuxième extrémité de chaque tube caloduc 152a-b. En outre, la deuxième extrémité de chaque tube caloduc 152a-b peut être équipée d'ailettes.

Selon un mode de réalisation particulier, au moins un tube caloduc 152b est en contact avec les parois du régulateur 316 pour permettre d'évacuer également les calories du régulateur 316 et ainsi en diminuer la température. Le caloduc 152b est par exemple intégré ou collé aux parois du régulateur 316.

Chaque tube caloduc 152a-b est, de préférence, pourvu d'un réseau capillaire, arrangé sur la paroi interne du tube (c'est-à-dire la paroi en contact avec le fluide) et réalisé selon différentes techniques qui peuvent être couplées, comme par exemple par la création de rainures sur la paroi interne du tube caloduc 152a-b avec des rainures qui s'étendent suivant la longueur du tube caloduc 152a-b, ou par un frittage métallique arrangé sur la paroi interne du tube caloduc 152a-b.

Lorsque le tube caloduc 152a-b est pourvu d'un réseau capillaire, le liquide formé revient vers l'extrémité chaude du tube caloduc 152a-b avec l'assistance des forces capillaires.

Dans ce cas, contrairement à ce qui a été dit plus haut, lorsque le tube caloduc 152a-b est pourvu d'un réseau capillaire, la première extrémité ne doit pas être strictement arrangée plus haut que la deuxième extrémité pour assurer le fonctionnement du système de refroidissement 150, même si une telle configuration optimise l'efficacité du système de refroidissement 150. En effet, la première extrémité et la deuxième extrémité peuvent être arrangées à une même hauteur.

Chaque tube caloduc 152a-b est réalisé dans un matériau métallique, comme par exemple, le cuivre, l'aluminium, l'inox ou le titane. Le fluide caloporteur situé à l'intérieur du tube caloduc 152a-b est un fluide compatible aux applications aéronautiques et aux conditions extrêmes de vol (température, pression ...), comme par exemple l'eau, l'éthanol, le méthanol. Le fluide caloporteur remplit, par exemple, 50 % du volume intérieur total du tube caloduc 152a-b.

Le boîtier 156 est réalisé dans un matériau métallique, comme par exemple, le titane, l'aluminium, le cuivre ou l'inox.

## Revendications

1. Système de régulation (100) destiné à assurer la régulation de débit d'une conduite (50) dans laquelle circule un flux d'air chaud, le système de régulation (100) comportant :
- une vanne (302) équipée d'un obturateur (303) destiné à être logé dans la conduite (50),
- une prise d'air amont (312) destinée à être arrangée sur la conduite (50) en amont de la vanne (302),
- une prise d'air aval (314) destinée à être arrangée sur la conduite (50) en aval de la vanne (302),
- un régulateur (316) comportant une entrée et une sortie et autorisant ou non le passage de l'air en fonction de la pression au niveau de son entrée, et
- un actionneur (304) actionnant l'obturateur (303) et comportant une première entrée et une deuxième entrée, où la première entrée est fluidiquement connectée à la sortie du régulateur (316),
le système de régulation (100) étant **caractérisé en ce qu'**il comporte un système de refroidissement (150) qui comporte :
- un radiateur externe (154) soumis à un flux d'air (55),
- un boîtier (156) comportant une première entrée, une deuxième entrée, une première sortie et une deuxième sortie, un premier chemin fluidique, à l'intérieur du boîtier (156), connectant fluidiquement la première entrée et la première sortie à travers le boîtier (156), et un deuxième chemin fluidique, à l'intérieur du boîtier (156), connectant fluidiquement la deuxième entrée et la deuxième sortie à travers le boîtier (156), les deux chemins fluidiques étant séparés,
- au moins un tube caloduc (152a-b), chaque tube caloduc (152a-b) comportant une première extrémité en contact avec le radiateur externe (154) et une deuxième extrémité logée dans le boîtier (156),
- un premier conduit amont (112a) connectant fluidiquement la prise amont (312) à la première entrée du boîtier (156),
- un deuxième conduit amont (112b) connectant fluidiquement la première sortie du boîtier (156) à l'entrée du régulateur (316),
- un premier conduit aval (114a) connectant fluidiquement la prise aval (314) à la deuxième entrée du boîtier (156), et
- un deuxième conduit aval (114b) connectant fluidiquement la deuxième sortie du boîtier (156) à la deuxième entrée de l'actionneur (304).

2. Système de régulation (100) selon la revendication 1, **caractérisé en ce que** le boîtier (156) est séparé en deux chambres fluidiquement isolées l'une de l'autre par une paroi intérieure (157), **en ce que** la deuxième extrémité de chaque tube caloduc (152a-b) est présente dans chaque chambre, **en ce que** le premier chemin fluidique est constitué par l'une des chambres qui s'étend entre la première entrée et la première sortie du boîtier (156), et **en ce que** le deuxième chemin fluidique est constitué par l'autre chambre qui s'étend entre la deuxième entrée et la deuxième sortie du boîtier (156).

3. Système de régulation (100) selon la revendication 1, **caractérisé en ce que** le premier chemin fluidique est constitué par un premier conduit interne (132) fluidiquement connecté entre le premier conduit amont (112a) et le deuxième conduit amont (112b), et **en ce que** le deuxième chemin fluidique est constitué par un deuxième conduit interne (134) fluidiquement connecté entre le premier conduit aval (114a) et le deuxième conduit aval (114b).

4. Système de régulation (100) selon la revendication 3, **caractérisé en ce que** le premier conduit interne (132) et le deuxième conduit interne (134) sont enroulés autour de la deuxième extrémité de chaque tube caloduc (152a-b).

5. Système de régulation (100) selon l'une des revendications 1 à 4, **caractérisé en ce qu'**au moins un tube caloduc (152b) est en contact avec des parois du régulateur (316).

6. Système de régulation (100) selon l'une des revendications 1 à 5, **caractérisé en ce que** le radiateur externe (154) comporte des ailettes et **en ce que** chaque tube caloduc (152a-b) traverse les ailettes à travers un orifice prévu à cet effet dans chaque ailette.

7. Turboréacteur (12) d'un aéronef (10), ledit turboréacteur (12) comportant des étages de compression, une conduite (50) dans laquelle circule un flux d'air chaud issu des étages de compression et un système de régulation (100) selon l'une des revendications précédentes.

8. Turboréacteur (12) selon la revendication 7, **caractérisé en ce qu'**il comporte une veine secondaire et **en ce que** le radiateur externe (154) est soumis à un flux d'air (55) prélevé dans la veine secondaire.

9. Aéronef (10) comportant un turboréacteur (12) selon l'une des revendications 7 ou 8.

## Patentansprüche

1. Regulierungssystem (100), das dazu bestimmt ist, die Regulierung des Durchflusses einer Leitung (50) sicherzustellen, in welcher ein Heißluftstrom strömt, wobei das Regulierungssystem (100) aufweist:
- ein Ventil (302), das mit einem Verschlussorgan (303) ausgestattet ist, das dazu bestimmt ist, in der Leitung (50) aufgenommen zu werden,
- eine stromaufwärtige Luftentnahmevorrichtung (312), die dazu bestimmt ist, an der Leitung (50) stromaufwärts des Ventils (302) angeordnet zu werden,
- eine stromabwärtige Luftentnahmevorrichtung (314), die dazu bestimmt ist, an der Leitung (50) stromabwärts des Ventils (302) angeordnet zu werden,
- einen Regler (316), der einen Einlass und einen Auslass aufweist und den Durchgang der Luft in Abhängigkeit vom Druck an seinem Einlass ermöglicht oder nicht, und
- einen Stellantrieb (304), der das Verschlussorgan (303) betätigt und einen ersten Einlass und einen zweiten Einlass aufweist, wobei der erste Einlass mit dem Auslass des Reglers (316) fluidisch verbunden ist,
wobei das Regulierungssystem (100) **dadurch gekennzeichnet ist, dass** es ein Kühlsystem (150) aufweist, welches aufweist:
- einen äußeren Kühler (154), der einem Luftstrom (55) ausgesetzt ist,
- ein Gehäuse (156), das einen ersten Einlass, einen zweiten Einlass, einen ersten Auslass und einen zweiten Auslass aufweist, wobei ein erster Fluidweg im Inneren des Gehäuses (156) den ersten Einlass und den ersten Auslass durch das Gehäuse (156) hindurch fluidisch verbindet und ein zweiter Fluidweg im Inneren des Gehäuses (156) den zweiten Einlass und den zweiten Auslass durch das Gehäuse (156) hindurch fluidisch verbindet, wobei die zwei Fluidwege getrennt sind,
- mindestens ein Wärmerohr (152a-b), wobei jedes Wärmerohr (152a-b) ein erstes Ende, dass sich mit dem äußeren Kühler (154) in Kontakt befindet, und ein zweites Ende, das im Gehäuse (156) angeordnet ist, aufweist,
- einen ersten stromaufwärtigen Kanal (112a), der die stromaufwärtige Entnahmevorrichtung (312) mit dem ersten Einlass des Gehäuses (156) fluidisch verbindet,
- einen zweiten stromaufwärtigen Kanal (112b), der den ersten Auslass des Gehäuses (156) mit dem Einlass des Reglers (316) fluidisch verbindet,
- einen ersten stromabwärtigen Kanal (114a), der die stromabwärtige Entnahmevorrichtung (314) mit dem zweiten Einlass des Gehäuses (156) fluidisch verbindet, und
- einen zweiten stromabwärtigen Kanal (114b), der den zweiten Auslass des Gehäuses (156) mit dem zweiten Einlass des Stellantriebs (304) fluidisch verbindet.

2. Regulierungssystem (100) nach Anspruch 1, **dadurch gekennzeichnet, dass** das Gehäuse (156) in zwei Kammern aufgeteilt ist, die durch eine innere Wand (157) fluidisch voneinander isoliert sind, dadurch, dass das zweite Ende jedes Wärmerohres (152a-b) in jeder Kammer vorhanden ist, dadurch, dass der erste Fluidweg aus einer der Kammern besteht, die sich zwischen dem ersten Einlass und dem ersten Auslass des Gehäuses (156) erstreckt, und dadurch, dass der zweite Fluidweg aus der anderen Kammer besteht, die sich zwischen dem zweiten Einlass und dem zweiten Auslass des Gehäuses (156) erstreckt.

3. Regulierungssystem (100) nach Anspruch 1, **dadurch gekennzeichnet, dass** der erste Fluidweg aus einem ersten inneren Kanal (132) besteht, der zwischen dem ersten stromaufwärtigen Kanal (112a) und dem zweiten stromaufwärtigen Kanal (112b) fluidisch zwischengeschaltet ist, und dadurch, dass der zweite Fluidweg aus einem zweiten inneren Kanal (134) besteht, der zwischen dem ersten stromabwärtigen Kanal (114a) und dem zweiten stromabwärtigen Kanal (114b) fluidisch zwischengeschaltet ist.

4. Regulierungssystem (100) nach Anspruch 3, **dadurch gekennzeichnet, dass** der erste innere Kanal (132) und der zweite innere Kanal (134) um das zweite Ende jedes Wärmerohres (152a-b) herumgewickelt sind.

5. Regulierungssystem (100) nach einem der Ansprüche 1 bis 4, **dadurch gekennzeichnet, dass** mindestens ein Wärmerohr (152b) sich in Kontakt mit Wänden des Reglers (316) befindet.

6. Regulierungssystem (100) nach einem der Ansprüche 1 bis 5, **dadurch gekennzeichnet, dass** der äußere Kühler (154) Rippen aufweist, und dadurch, dass jedes Wärmerohr (152a-b) die Rippen durch eine zu diesem Zweck in jeder Rippe vorgesehene Öffnung durchquert.

7. Turbostrahltriebwerk (12) eines Luftfahrzeugs (10), wobei das Turbostrahltriebwerk (12) Kompressionsstufen, eine Leitung (50), in welcher ein von den Kompressionsstufen kommender Heißluftstrom strömt, und ein Regulierungssystem (100) nach einem der vorhergehenden Ansprüche aufweist.

8. Turbostrahltriebwerk (12) nach Anspruch 7, **dadurch gekennzeichnet, dass** es einen Sekundärstromkanal aufweist, und dadurch, dass der äußere Kühler (154) einem Luftstrom (55) ausgesetzt ist, der im Sekundärstromkanal entnommen wird.

9. Luftfahrzeug (10), welches ein Turbostrahltriebwerk (12) nach einem der Ansprüche 7 oder 8 aufweist.

## Claims

1. Regulation system (100) intended to ensure the flow rate regulation of a duct (50) in which circulates a hot air stream, the regulation system (100) comprising:
- a valve (302) equipped with a shutter (303) intended to be housed in the duct (50),
- an upstream air intake (312) intended to be arranged on the duct (50) upstream of the valve (302),
- a downstream air intake (314) intended to be arranged on the duct (50) downstream of the valve (302),
- a regulator (316) comprising an inlet and an outlet and allowing or preventing the passage of the air based on the pressure at its inlet, and
- an actuator (304) actuating the shutter (303) and comprising a first inlet and a second inlet, in which the first inlet is fluidically connected to the outlet of the regulator (316),
the regulation system (100) being **characterized in that** it comprises a cooling system (150) which comprises:
- an outer radiator (154) subjected to an air stream (55),
- a housing (156) comprising a first inlet, a second inlet, a first outlet and a second outlet, a first fluidic path, inside the housing (156), fluidically connecting the first inlet and the first outlet through the housing (156), and a second fluidic path, inside the housing (156), fluidically connecting the second inlet and the second outlet through the housing (156), the two fluidic paths being separated,
- at least one heat pipe (152a-b), each heat pipe (152a-b) comprising a first end in contact with the outer radiator (154) and a second end housed in the housing (156),
- a first upstream duct (112a) fluidically connecting the upstream intake (312) to the first inlet of the housing (156),
- a second upstream duct (112b) fluidically connecting the first outlet of the housing (156) to the inlet of the regulator (316),
- a first downstream duct (114a) fluidically connecting the downstream intake (314) to the second inlet of the housing (156), and
- a second downstream duct (114b) fluidically connecting the second outlet of the housing (156) to the second inlet of the actuator (304).

2. Regulation system (100) according to Claim 1, **characterized in that** the housing (156) is divided into two chambers fluidically isolated from one another by an internal wall (157), **in that** the second end of each heat pipe (152a-b) is present in each chamber, **in that** the first fluidic path consists of one of the chambers which extends between the first inlet and the first outlet of the housing (156), and **in that** the second fluidic path consists of the other chamber which extends between the second inlet and the second outlet of the housing (156).

3. Regulation system (100) according to Claim 1, **characterized in that** the first fluidic path consists of a first internal duct (132) fluidically connected between the first upstream duct (112a) and the second upstream duct (112b), and **in that** the second fluidic path consists of a second internal duct (134) fluidically connected between the first downstream duct (114a) and the second downstream duct (114b).

4. Regulation system (100) according to Claim 3, **characterized in that** the first internal duct (132) and the second internal duct (134) are wound around the second end of each heat pipe (152a-b).

5. Regulation system (100) according to one of Claims 1 to 4, **characterized in that** at least one heat pipe (152b) is in contact with walls of the regulator (316).

6. Regulation system (100) according to one of Claims 1 to 5, **characterized in that** the outer radiator (154) comprises fins and **in that** each heat pipe (152a-b) passes through the fins through an orifice provided for that purpose in each fin.

7. Turbojet engine (12) of an aircraft (10), said turbojet engine (12) comprising compression stages, a duct (50) in which circulates a hot air stream coming from the compression stages and a regulation system (100) according to one of the preceding claims.

8. Turbojet engine (12) according to Claim 7, **characterized in that** it comprises a secondary air flow and **in that** the outer radiator (154) is subjected to an air stream (55) taken from the secondary air flow.

9. Aircraft (10) comprising a turbojet engine (12) according to one of Claims 7 and 8.
